Europäisches Patentamt

European Patent Office

Office européen des brevets

(11) Publication number: **0 466 278 A1**

# EUROPEAN PATENT APPLICATION

(21) Application number: **91201836.3**

(22) Date of filing: **12.07.91**

(51) Int. Cl.5: **B65G 15/14**

(30) Priority: **12.07.90 NL 9001589**

(43) Date of publication of application:
**15.01.92 Bulletin 92/03**

(84) Designated Contracting States:
**BE DE FR GB LU NL**

(71) Applicant: **Smit, Gerardus**
**Edelstenenbaan 15**
**NL-3402 XA Ijsselstein(NL)**

(72) Inventor: **Smit, Gerardus**
**Edelstenenbaan 15**
**NL-3402 XA Ijsselstein(NL)**

(74) Representative: **Voncken, Bartholomeus Maria**
**Christiaan et al**
**Octrooibureau Los en Stigter B.V. P.O. Box**
**20052**
**NL-1000 HB Amsterdam(NL)**

(54) Conveying apparatus for bottles.

(57) The conveying apparatus according to the invention comprises at least one conveying section provided with two distanced endless driven conveying elements engaging the collar of bottles. Preferably the conveying elements exist of belts. In adjoining conveying sections the conveying elements are lead around reversing rolls whereas transferring means are provided between both sections.

fig.2

EP 0 466 278 A1

The invention relates to a conveying apparatus for bottles provided with an extending collar at their neck, such as PET-bottles or alike.

A known conveying apparatus for bottles comprises a driven conveying belt, on which the bottles are standing vertically. For application to PET-bottles such an conveying apparatus is less appropriate. For, PET-bottles have a relative narrow base whereas the weight of the PET-bottles is low compared to conventional glass bottles. Moreover PET-bottles often have a large volume resulting in an unstable positioning of these PET-bottles. Thus conveying these bottles in the known way is not or hardly possible because the bottles quickly topple and cause obstructions. An increase of the conveying velocity, as desired in modern industry, is absolutely impossible. Further it is disadvantageous that the plastic PET-bottles are statically loaded as a result of a mutual movement, such that a relative movement is made more difficult. Further their surfaces already are rather rough thus further impeding a relative movement.

In an other known apparatus of the type referred to above the bottles are suspended with their collars in a suspension profile. This suspension profile may follow an inclined track along which the bottles slide downwards under influence of the gravitational force. It is possible too, that the suspension profile extends horizontally whereas dogs engage the bottles. However it is an disadvantage of such a construction that as a result of the force applied by the dogs onto the bottles a toppling of these bottles occurs, such that the collar is clamped at the suspension profile and moving onwards of the bottles is rendered more difficult. Further the application of dogs has as a disadvantage that if an obstruction of the movement of the bottles occurs, measures should be taken to stop the dogs or to disengage them from the bottles, for elsewise the bottles would be damaged. Such measures are expensive and complicated.

It is an object of the invention to provide a conveying apparatus of the type referred to above in which the mentioned disadvantages are removed in an effective way.

Thus the conveying apparatus according to the invention is characterized by at least one conveying section provided with two distanced endless driven conveying elements for receiving therinbetween the neck of the bottles, wherein the said distance is smaller than the diameter of the collar.

Due to the application of such conveying elements the bottles are engaged far above their centre of gravity. Thus also at high conveying velocities a toppling of the bottles is avoided in an effective way. The toppling of the bottles is not possible at all. If the bottles engage an obstruction the conveying elements can slide relative to the bottles such that the bottles are not pressed against the obstruction with great force. As a result damages of the bottles as well as of the conveying apparatus are avoided. When removing the obstruction the bottles are moved further automatically. In this respect it is noted that the conveying elements may be provided entirely, or locally, with a surface having a low friction. This would be possible for example by spraying a soap mixture onto the conveying elements. As a result sliding of the conveying elements along the neck of the bottles will be simplified extremely.

Generally the conveying elements will be positioned below the collar of the bottles, such that the bottles rest with this collar onto the conveying elements. However it is possible too, that the distance between the conveying elements is such that they clampingly receive the bottles therebetween. Like this it is not necessary that the conveying elements are positioned below the collar. Conveying elements engaging the neck above the collar can effectively convey bottles, for example over short distances.

The conveying apparatus further is characterized by guidings supporting the conveying elements. These guidings may be applied for taking care that the required distance between these conveying elements is maintained along the entire length of the conveying elements, and to take care that the required force is applied onto the neck of the bottles. In this respect it is possible that the guidings comprise guiding rolls, guiding plates or alike.

Preferably the conveying elements exist of belts. Such belts can be manufactured cheaply whereas guiding them can be obtained in a comparative simple way. Further such belts are very supple such that the conveying sections can easily follow different tracks.

In a simple, but very effective embodiment the belts have a circular cross-section.

According to another embodiment of the conveying apparatus the conveying section further comprises a support plane for supporting the bottles at their lower sides. In such an embodiment the support of the bottles is mainly obtained by the support plane. The conveyor elements only take care of moving the bottles. If the support plane is stationary it should have a smooth surface enabling bottles, which are moved by the conveying elements, to slide easily along the support plane.

It is possible however that the support plane is drivable in the same direction as the conveying elements are. In such a case it is not necessary for the support plane to have a smooth surface.

Further an embodiment of the conveying apparatus according to the invention is important, which comprises at least two adjoining conveying sections aligned at the connection, of which the conveying elements at their ends are led around reversing rolls, whereas at least between the conveying elements of both conveying sections transferring means are provided for transferring bottles from one conveying section to the other conveying section. An important advantage of this embodiment is that bottles can move straight forward at the connection of two conveying sections. In a conventional conveying apparatus, in which the bottles are positioned on conveyor belts, such a movement is not possible; in the past bottles had to be displaced transversally at the end of a conveyor belt towards a connecting next conveyor belt, thus rather limiting the conveying velocity. However according to the invention no limitation for the conveying velocity occurs, for the direction in which the bottles are moved by the conveying apparatus does not change. As a result of the application of the transferring means a support of the bottles at the connection is guaranteed.

In a simple embodiment of such a conveying apparatus the transferring means comprise stationary guidings for engaging the lower side of the bottle collars. At the stationary guidings the bottles are pushed onwards by the preceeding bottles. However, such an embodiment has the disadvantage that the last bottle of a series can come to a stand still at the stationary guidings and has to be removed by external means, or manually.

Thus still a different embodiment is preferred in which the transferring means exist of two endless driven auxiliary conveying elements which with their ends overlap the reversing rolls of the conveying elements of both conveying sections. Using these driven auxiliary conveying elements transferring the bottles from one conveying section towards another conveying section occurs automatically. Due to the overlap at the reversing rolls of the conveying elements this transfer occurs steadily without engaging the bottles shockwise.

An advantageous embodiment is characterized in that the auxiliary conveying elements are guided by guiding rolls of which the rotation axes coincide with the rotation axes of the corresponding reversing rolls of the conveying elements. Thus considerable constructive advantages are obtained, for the bearing of the guiding rolls of the auxiliary conveying elements and the reversing rolls of the conveying elements can occur on the same axis.

The location of the auxiliary conveying elements relative to the conveying elements can be realised in different ways. According to a preferred embodiment the guiding rolls are mainly positioned above the reversing rolls corresponding therewith. If for example the bottles are supported by the conveying elements below their collars the auxiliary conveying elements can engage the neck of the bottle above the collar. The next conveying elements taking over again the bottles behind the auxiliary conveying elements than again can engage the bottles below the collar.

In an embodiment described before it is advantageous for a good engagement of the bottles that the distance between the two auxiliary conveying elements is smaller than the distance between the conveying elements. Like this the engagement of the neck of the bottles by the auxiliary conveying elements occurs with such a force, that the bottles are held firmly.

In practice this can be realised using an embodiment, in which the diameter of the guiding rolls is larger than the diameter of the reversing rolls. Such an embodiment leads to the desired result. If the conveying velocity of the auxiliary conveying elements should be the same as the conveying velocity of the conveying elements this means however, that the rotational velocity of the guiding rolls should be less than the rotational velocity of the reversing rolls.

However an embodiment is conceivable in which the guiding rolls and the reversing rolls which have the same axis of rotation have the same diameter, whereas the axis of rotation is inclined such that cooperating reversing rolls are distanced further than cooperating guiding rolls. In such an embodiment the rotational velocity of the guiding rolls and of the reversing rolls can be kept identical without causing a difference between the conveying velocities. It is clear however that dependant on the respective conveying velocities several variations of the construction are possible.

Mostly the guiding rolls of the auxiliary conveying elements function as reversing rolls for these auxiliary conveying elements too. This means, that at the location where the conveying elements are lead away from the track of the bottles the auxiliary conveying elements just start their supporting action. However it is possible too, that the auxiliary conveying elements at their foremost end as seen in the conveying direction extend around reversing rolls which are distanced further than the guiding rolls. Between the reversing rolls of the auxiliary conveying elements and the guiding rolls thereof the auxiliary conveying elements move towards each other, thus providing a narrowing receiving track for the incoming bottle necks. Thus taking over the bottles from the conveying elements by the auxiliary conveying elements is carried out very gradually. Of course it is possible too to provide a correspondingly widening section of the auxiliary conveying elements at the second conveying section.

It has been mentioned previously that the conveying velocities of the auxiliary conveying elements and of the conveying elements can differ or can be identical. Dependant on the chosen shape and the chosen ratio between the velocities it is possible, that the guiding rolls of the auxiliary conveying elements and the reversing rolls of the conveying elements are integrally shaped. In such an embodiment the drive of the auxiliary conveying elements is automatically received from the drive of the conveying elements.

The auxiliary conveying elements can exist of belts too. The shape of these belts can correspond with the shape of the conveying elements itself.

At the transition of one conveying section to the adjoining conveying section the conveying velocity of the bottles can be varied. Such a transition than occurs in steps, the auxiliary conveying elements having an intermediate velocity. Of course it is possible to carry out this transition stepwise, whereby several auxiliary conveying elements are positioned behind each other. The essence of the construction does not change however. Hereinafter the invention will be elucidated by means of the drawings, in which a number of embodiments of the conveying apparatus are illustrated.

Fig. 1 shows the principle of the conveying apparatus of the invention;

Fig. 2 shows schematically and in a top plan view an embodiment of the conveying apparatus of the invention;

Fig. 3 shows a section according to line I-I in fig. 2;

Fig. 4 shows a variation on fig. 3;

Fig. 5 shows an embodiment of the conveying apparatus with support plane;

Fig. 6 shows two alternatives for the support of the conveying elements;

Fig. 7 shows schematically and in a top plan view an embodiment of the conveying apparatus with two adjoining conveying sections;

Fig. 8 shows a section according to line VIII-VIII in fig. 7;

Fig. 9 shows a different embodiment of the conveying apparatus with two adjoining conveying sections;

Fig. 10 shows an alternative for the embodiment shown in fig. 8;

Fig. 11 shows still another alternative for the embodiment shown in fig. 8, and

Fig. 12 shows yet another alternative for the embodiment shown in fig. 8.

The conveying apparatus according to the invention is meant for bottles 1 which comprise at their neck 2 a projecting collar 3, such as PET-bottles or alike. The conveying apparatus is characterized by two distanced endless driven conveying elements 4 receiving thereinbetween the neck 2 of the bottles 1. Here the distance between the conveying elements 4 is smaller than the diameter of the collar 3.

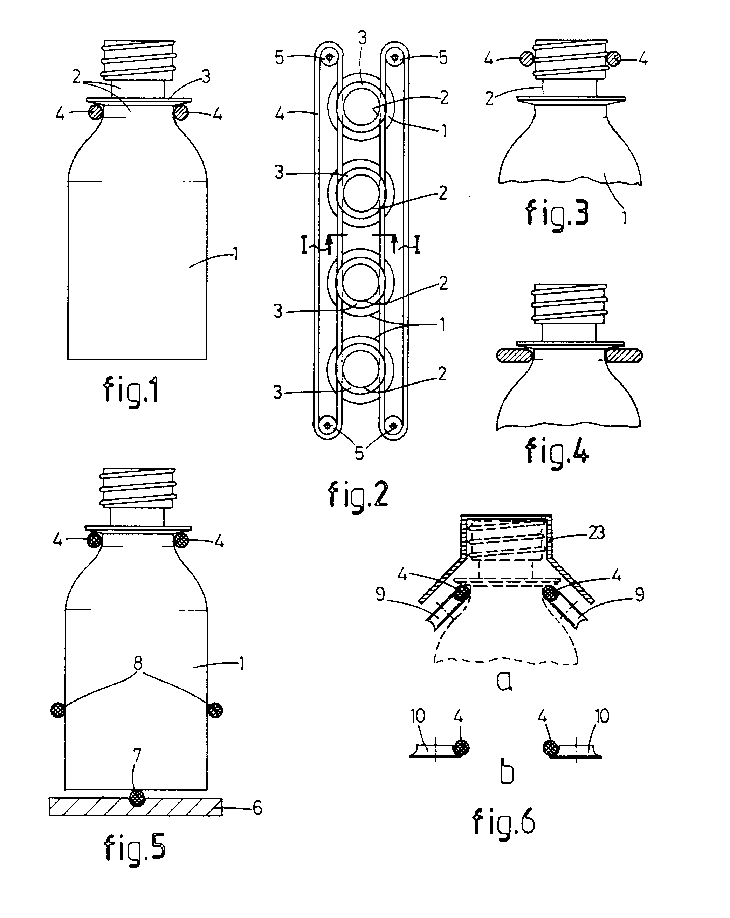

As appears from fig. 2 the conveying elements 4 extend around reversing rolls 5. The drive of the conveying elements 4 can take place through these reversing rolls 5. The combination of reversing rolls 5 and conveying elements 4, as illustrated in fig. 2, constitutes a conveying section of the conveying apparatus. As will appear later the conveying apparatus may comprise several adjoining conveying sections.

In fig. 1 it is illustrated that the conveying elements 4 engage below collar 3 of the bottles 1. However it is possible too that, as illustrated in fig. 3, the conveying elements 4 engage the uppermost, threaded, part of the neck 2. In such a case the mutual distance between the conveying elements 4 has to be such that the neck is engaged clampingly.

Generally the conveying elements 4 comprise belts having a circular cross section. However alternative embodiments are possible too, such as a belt having an oval cross section as illustrated in fig. 4.

In the embodiment shown in fig. 1 the bottles 1 are conveyed and supported by the belts 4. As appears from fig. 5 however it is possible too that the belts 4 only take care of moving the bottles 1, whereas the support of the bottles is provided by a support plane 6 positioned at the lower side of the bottles. Said support plane 6 can be stationary and can be provided with a smooth surface, such that the bottles may easily slide relative thereto. However it is possible too that the support plane 6 moves in the same direction as the belts 4. The embodiment illustrated in fig. 5 shows a special variation thereof, in which a driven support belt 7 is applied on the support plane 6. Finally it is possible too to provide guiding belts 8 at both sides of the bottle 1.

The belts 4 extending between the reversing rolls 5 generally carry a large number of bottles. Thus it is mostly necessary to support the belts 4 between the reversing rolls 5. Fig. 6 shows two different embodiments whereby in fig. 6a inclined support rolls 9 are applied whereas in fig. 6b horizontal support rolls 10 are applied.

In fig. 6a the support rolls 9 are housed in a support construction 23 narrowly enclosing the bottles (indicated in dotted lines). As a result a toppling of the bottles is avoided.

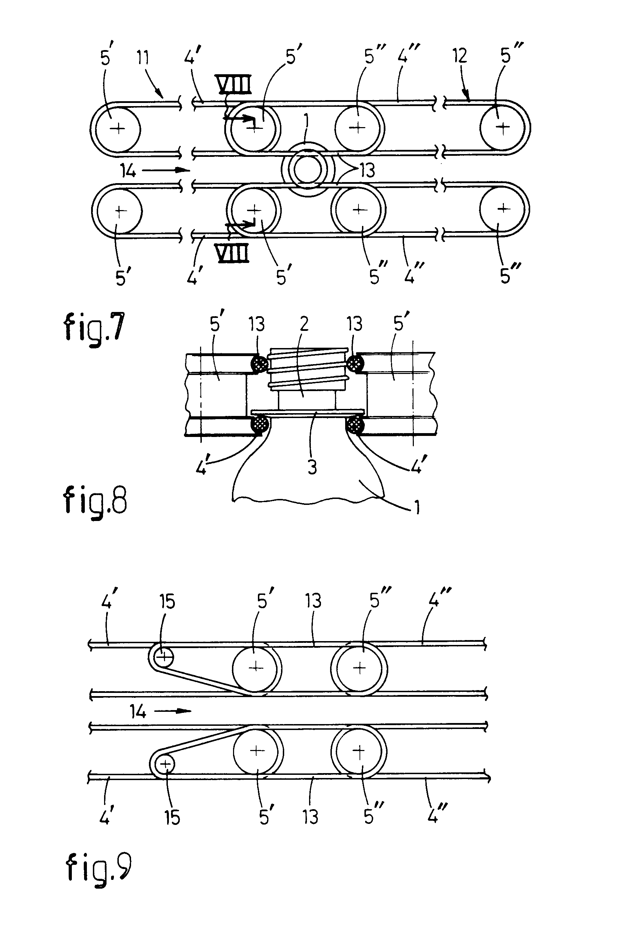

In fig. 7 two conveying sections 11 and 12 are indicated which are aligned. The belts 4' of the conveying section 11 extend around reversing rolls 5', whereas the belts 4'' of the conveying section 12 extend around reversing rolls 5''. Between both conveying sections 11, 12 transferring means are provided for transferring bottles from the one conveying section towards the other conveying section. In the embodiment shown in fig. 7 these transferring means comprise two endless driven auxiliary conveying elements 13 led around the reversing rolls 5' and 5'' distanced most closely of the respective conveying sections 11 and 12. Again the auxiliary conveying elements 13 can comprise belts.

As appears especially from fig. 8, the belts 4' of the conveying section 11 engage the lower side of the collar 3 of the bottles 1 to be conveyed. At the reversing rolls 5'' the belts 13 engage the section of the neck 2 of the bottles above the collar 3. If the bottles 1 are conveyed along by the belts 13 the collar 3 is freed from the belts 4' of the first conveying section 11 and transferred by belts 13 towards belt 4'' of the second conveying section 12. After arrival at the reversing rolls 5'' again a situation according to fig. 8 arises, in which the belts 4'' engage below the collar 3 of the bottles 1, after which the belts 13 release the neck such that the bottles are conveyed further by the second conveying section 12.

For engaging the section of the neck above the collar 3 by the belts 13 it can be advantageous if these belts 13 at their foremost end as seen in the conveying direction (in fig. 7 and fig. 9 indicated by arrow 14) extend around reversing rolls 15 distanced further than reversing rolls 5'. This is illustrated in fig. 9. As a result supplying the uppermost part of the neck 2 of the bottles 1 between the belts 13 occurs gradually.

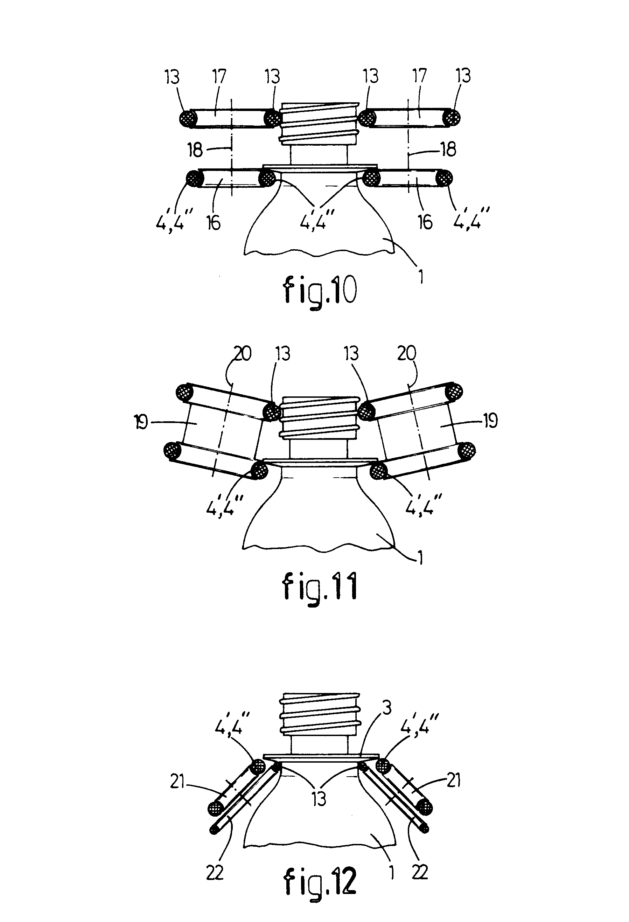

For shockfree transferring bottles 1 from one conveying section 11 towards the second conveying section 12 it is necessary that the auxiliary conveying elements 13 overlap reversing rolls 5' and 5''. Using the embodiment shown in fig. 7 and 8 this can be realised without any problems. However it is not necessary that the guiding of the auxiliary conveying elements 13 occurs using the same reversing rolls as are used for guiding conveying elements 4' and 4''. An alternative embodiment is shown in fig. 10. Now conveying elements 4' and 4'' respectively, are led around reversing rolls 16, whereas the auxiliary conveying elements 13 are led around reversing rolls 17. It is possible however that the axis 18 of the reversing rolls 16 and 17 coincides.

For obtaining a proper clamping of the neck 2 between the auxiliary conveying elements 13 these conveying elements 13 generally have to be distanced closer than the conveying elements 4' and 4'' respectively. In an embodiment according to fig. 8, in which the auxiliary conveying elements 13 are driven by the same reversing roll 5' of the conveying elements 4' this means, that as a result of the larger diameter of the reversing rolls 5' present then at the auxiliary conveying elements 13, these auxiliary conveying elements would move with a larger velocity than the conveying elements 4'. This can be undesired. In the embodiment according to fig. 10 the reversal rolls 17 too have a larger diameter than the reversal rolls 6. However because there is no fixed connection between the reversal rolls 16 and 17 the rotational velocity of the reversing rolls 17 can be chosen lower, such that the auxiliary conveying elements 13 move with the same velocity as the conveying elements 4' and 4'', respectively. However, an embodiment according to fig. 10 too provides the possibility to obtain intendedly differences of velocity between the conveying elements 4' and 4'', respectively, and the auxiliary conveying elements 13.

In fig. 11 an embodiment is shown in which the auxiliary conveying elements 13 and the conveying elements 4', 4'' are carried by the same reversing rolls 19. These reversing rolls have inclined axes 20, such that the auxiliary conveying elements 13 are distanced closer than the conveying elements 4', 4''. The diameter of the reversing rolls 19 at the auxiliary conveying elements 13 however is equal to the diameter at the conveying elements 4', 4''. As a result it is obtained, that the conveying velocity at the auxiliary conveying elements 13 is identical to the conveying velocity at the conveying elements 4' and 4''.

Finally fig. 12 shows still another embodiment for transferring bottles from one conveying section towards another conveying section. Now the reversing rolls 21 of the conveying elements 4', 4'' and the reversing rolls 22 of the auxiliary conveying elements 13 are positioned such that the conveying elements 4', 4'' together with the auxiliary conveying elements 13 engage below the collar 13 of the bottles 1.

In the embodiments of the conveying apparatus shown previously, in which the bottles are conveyed from one conveying section towards an adjoining next conveying section the auxiliary conveying elements 13 always are positioned above the conveying elements 4', 4''. However it is possible too, that the conveying elements 4', 4'' extend above the collar 3 of the bottles 1 and engage the uppermost part of the neck 2. In such a case the auxiliary conveying elements 13 are provided below the conveying elements 4', 4'' and engage the lower side of the collar 3. Such an embodiment however is not preferred, for the transport using the auxiliary conveying elements 13 is only temporary, whereas the bottles are conveyed over large distances using the conveying elements 4' and 4'' and this transport over large distances is carried out in the best way if the conveying elements engage below the collar 3 of the bottles 1.

The invention is not limited to the embodiments described before which can be varied widely within the scope of the invention.

## Claims

1. Conveying apparatus for bottles provided with an extending collar at their neck, such as PET-bottles or alike, **characterized** by at least one conveying section provided with two distanced endless driven conveying elements for receiving thereinbetween the neck of the bottles, wherein the said distance is smaller than the diameter of the collar.

2. Conveying apparatus according to claim 1, **characterized** in that the distance between the conveying elements is such that they clampingly receive the bottles therebetween.

3. Conveying apparatus according to claim 1 or 2, **characterized** by guidings supporting the conveying elements.

4. Conveying apparatus according to claim 3, **characterized** in that the guidings comprise guiding rolls, guiding plates or alike.

5. Conveying apparatus according to one of claims 1-4, **characterized** in that the conveying elements exist of belts.

6. Conveying apparatus according to claim 5, **characterized** in that the belts have a circular cross-section.

7. Conveying apparatus according to one of claims 1-6, **characterized** in that the conveying section further comprises a support plane for supporting the bottles at their lower sides.

8. Conveying apparatus according to claim 7, **characterized** in that the support plane is drivable in the same direction as the conveying elements are.

9. Conveying apparatus according to one of claims 1-8, **characterized** in that it comprises at least two adjoining conveying sections aligned at the connection, of which the conveying elements at their ends are led around reversing rolls, whereas at least between the conveying elements of both conveying sections transferring means are provided for transferring bottles from one conveying section to the other conveying section.

10. Conveying apparatus according to claim 9, **characterized** in that the transferring means comprise stationary guidings for engaging the lower side of the bottle collars.

11. Conveying apparatus according to claim 9, **characterized** in that the transferring means exist of two endless driven auxiliary conveying elements which with their ends overlap the reversing rolls of the conveying elements of both conveying sections.

12. Conveying apparatus according to claim 11, **characterized** in that the auxiliary conveying elements are guided by guiding rolls of which the rotation axes coincide with the rotation axes of the corresponding reversing rolls of the conveying elements.

13. Conveying apparatus according to claim 12, **characterized** in that the guiding rolls are mainly positioned above the reversing rolls corresponding therewith.

14. Conveying apparatus according to claim 13, **characterized** in that the distance between the two auxiliary conveying elements is smaller than the distance between the conveying elements.

15. Conveying apparatus according to claim 14, **characterized** in that the diameter of the guiding rolls is larger than the diameter of the reversing rolls.

16. Conveying apparatus according to claim 14, **characterized** in that the guiding rolls and the reversing rolls which have the same axis of rotation have the same diameter, whereas the axis of rotation is inclined such that cooperating reversing rolls are distanced further than cooperating guiding rolls.

17. Conveying apparatus according to one of claims 12-16, **characterized** in that the guiding rolls of the auxiliary conveying elements function as reversing rolls for these auxiliary conveying elements too.

18. Conveying apparatus according to one of claims 12-16, **characterized** in that the auxiliary conveying elements at their foremost end as seen in the conveying direction extend around reversing rolls which are distanced further than the guiding rolls.

19. Conveying apparatus according to one of claims 12-18, **characterized** in that the guiding rolls of the auxiliary conveying elements and the reversing rolls of the conveying elements are integrally shaped.

20. Conveying apparatus according to one of claims 9-18, **characterized** in that the conveying velocities of the conveying sections mutually differ.

21. Conveying apparatus according to one of claims 11-20, **characterized** in that the auxiliary conveying elements exist of belts.

22. Conveying apparatus according to one of claims 1-21, **characterized** in that provisions are made for at least locally decreasing the friction of the conveying elements.

fig.1

fig.2

fig.3

fig.4

fig.5

fig.6

fig.7

fig.8

fig.9

fig.10

fig.11

fig.12

European
Patent Office

EUROPEAN SEARCH
REPORT

Application Number

EP 91 20 1836

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | GB-A-2 174 352 (SEITZ ENZINGER NOLL MASCHINEN-BAU AG.)<br>* the whole document *<br>– – – | 1,3-6,22 | B 65 G 15/14 |
| X,A | EP-A-0 163 330 (THOMASSEN&DRIJVER-VERBLIFA)<br>* page 2, line 14 - page 5, line 27; figures *<br>– – – | 1-5,9,11, 12,19-22 | |
| A | FR-A-2 303 738 (SARRE MOISE)<br>* page 3, line 6 - line 38; figures *<br>– – – | 1,3-7,10, 22 | |
| A | EP-A-0 150 889 (THOMASSEN&DRIJVER-VERBLIFA)<br>* claims 1-7; figures *<br>– – – – – | 2-7,8,21 | |

| TECHNICAL FIELDS SEARCHED (Int. Cl.5) |
|---|
| B 65 G |

The present search report has been drawn up for all claims

| Place of search | Date of completion of search | Examiner |
|---|---|---|
| The Hague | 09 October 91 | VAN ROLLEGHEM F.M. |